# FASCICULE DE BREVET EUROPEEN

(11) **EP 1 409 897 B1**
(45) Date de publication et mention de la délivrance du brevet: **02.03.2005**
(21) Numéro de dépôt: 02770051.7
(22) Date de dépôt: 22.07.2002
(51) Int. Cl.: F16J 15/08, F16J 15/12

(54) **JOINT DE CULASSE COMPRENANT UN STOPPEUR BORD A BORD**
ZYLINDERKOPFDICHTUNG MIT EINEM RAND-ZU-RAND-ANSCHLAGSRING
CYLINDER-HEAD GASKET COMPRISING AN EDGE-TO-EDGE STOP RING

(30) Priorité: 23.07.2001 FR 0109809
(43) Date de publication de la demande: 21.04.2004
(73) Titulaire: S.A. Meillor, 87140 Nantiat (FR)
(72) Inventeur: KEBAILI, Christian, F-87100 Limoges (FR)
(74) Mandataire: Ripper, Monika Sigrid, Dr.
(86) Numéro de dépôt international: PCT/FR2002/002619
(87) Numéro de publication internationale: WO 2003/010450

(56) Documents cités:
- DE-A- 19 523 825
- FR-A- 2 736 681
- US-A- 4 750 749
- US-A- 4 976 225

## Description

La présente invention se rapporte à un joint, notamment un joint de culasse, comprenant un stoppeur bord à bord. La présente invention est plus particulièrement adaptée au joint de culasse multifeuilles comprenant au moins deux tôles dont au moins une est nervurée.

Selon un mode de réalisation, un joint de culasse comprend deux tôles avec au moins une ouverture correspondant à l'ouverture d'une chambre de combustion, au moins l'une des deux tôles, et de préférence les deux, comportant une nervure ménagée autour de chaque ouverture, à distance du bord de ladite l'ouverture, lesdites nervures étant déformées vers l'intérieur du joint.

En complément, le joint comprend une tôle support intermédiaire interposée entre les deux tôles extérieures, au droit des nervures, ainsi qu'un stoppeur, sous forme d'une cale annulaire, ayant un diamètre intérieur correspondant sensiblement à celui de l'ouverture et un diamètre extérieur inférieur à celui des nervures, ledit stoppeur étant disposé bord à bord, dans le prolongement de la tôle support.

La liaison entre le stoppeur et la tôle support est généralement réalisée par soudage, collage ou analogue. La demande de brevet FR-00.12669 (numéro de publication FR 2 814 777) au nom du demandeur propose un procédé de fixation du stoppeur sur sa tôle support par expansion radiale dudit stoppeur.

La publication DE 195 23 825 A1 propose également un procédé de fixation d'un stoppeur sur sa tôle support, au moyen de languettes.

La présente invention vise à proposer un nouveau joint de culasse comprenant un stoppeur bord à bord, avec une nouvelle liaison stoppeur/tôle support procurant un meilleur maintien dudit stoppeur.

A cet effet, l'invention a pour objet un joint de culasse selon la revendication 1. L'invention a aussi pour objet un joint de culasse avec au moins une ouverture correspondant à une chambre de combustion, comprenant d'une part, au moins deux tôles extérieures, au moins l'une d'elles comportant une nervure circulaire, entourant l'ouverture, ménagée à une distance d du bord de ladite ouverture, et d'autre part, une tôle support disposée entre les tôles extérieures, comprenant une ouverture de diamètre supérieure à l'ouverture des tôles extérieures afin de définir un espace dans lequel est disposé un stoppeur sous forme d'une cale annulaire de diamètre intérieur correspondant à celui de l'ouverture et de diamètre extérieur sensiblement ajusté à l'ouverture de la tôle support de manière à être disposé bord à bord, caractérisé en ce qu'il comprend un élément distinct interposé entre le stoppeur et la tôle support assurant le maintien dudit stoppeur.

Selon un mode de réalisation, l'élément interposé entre le stoppeur et la tôle support se présente sous la forme d'un rivet comportant à chaque extrémité un rebord rabattu contre les faces de la tôle support et du stoppeur afin de les enserrer et de limiter leurs mouvements relatifs.

Avantageusement, le stoppeur comprend en périphérie au moins une languette au niveau de laquelle est disposé l'élément de maintien.

Selon un autre mode de réalisation, une goupille enfoncée à force selon un montage entre cuir et chair est interposée entre le stoppeur et la tôle support.

D'autres caractéristiques et avantages ressortiront de la description qui va suivre du dispositif de l'invention, description donnée à titre d'exemple uniquement, en regard des dessins annexés sur lesquels:
- la figure 1 est une vue en coupe dans le plan de la tôle support d'un joint de culasse monocylindre selon l'invention,
- la figure 2 est une vue en coupe dans le plan de la tôle support d'un joint de culasse multi-cylindre selon une première variante de l'invention,
- la figure 3 est une vue en coupe dans le plan de la tôle support d'un joint de culasse multi-cylindre selon une autre variante,
- la figure 4 est une vue en élévation de dessus d'un joint de culasse selon l'invention, et
- la figure 5 est une coupe transversale agrandie selon la ligne V-V de la figure 4.

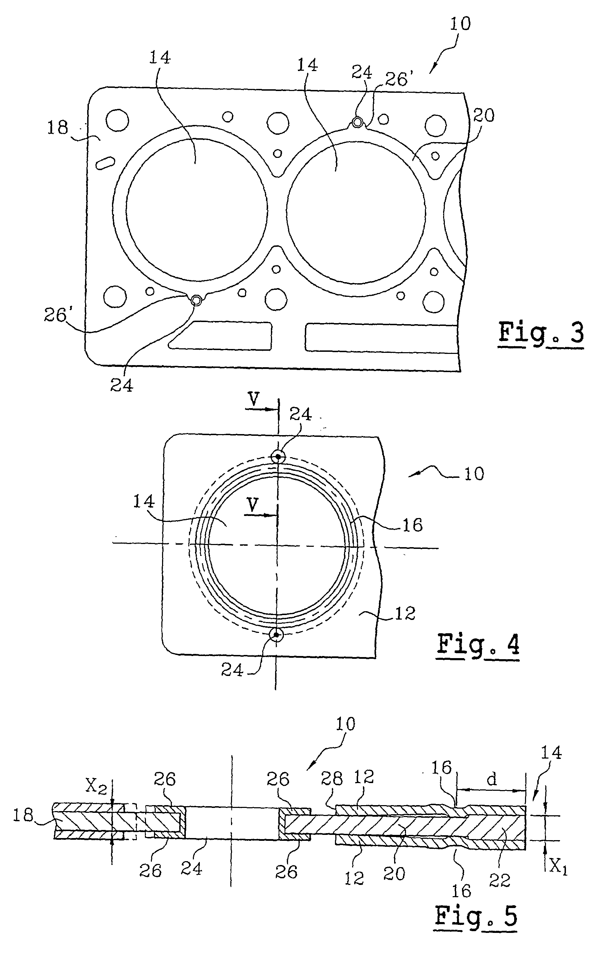

Sur les figures, on a représenté un joint de culasse 10 comprenant au moins une tôle extérieure 12, et de préférence deux comme illustré sur la figure 5, avec au moins une ouverture 14 correspondant à une chambre à combustion d'un bloc moteur, au moins l'une des tôles extérieures 12, et de préférence les deux, comportant une nervure 16 circulaire, entourant l'ouverture 14, ménagée à une distance d du bord de l'ouverture 14, la ou les nervures étant déformée(s) vers l'intérieur du joint.

De façon connue, une tôle support intermédiaire 18 est interposée entre les tôles extérieures 12. Dans le cas où le joint ne comporte qu'une seule tôle extérieure 12, la tôle support 18 est disposée contre la face de la tôle extérieure 12 sur laquelle est ménagée en saillie la nervure 16.

La tôle support comprend une ouverture concentrique à l'ouverture 14 de la ou des tôles extérieures 12, de diamètre supérieur à l'ouverture 14 afin de définir un espace dans lequel est disposé un stoppeur 20, sous forme d'une cale annulaire, de diamètre intérieur correspondant à celui de l'ouverture 14 et de diamètre extérieur sensiblement ajusté à l'ouverture de la tôle support.

Ce stoppeur comprend au moins une zone 22 d'épaisseur X1 supérieure à l'épaisseur X2 de la tôle support afin de constituer un limiteur d'écrasement des nervures, une première barrière d'étanchéité et de permettre la mise en voûte d'au moins une tôle extérieure 12 de manière à limiter les débattements de cette dernière en fonctionnement.

Selon les cas, le diamètre extérieur du stoppeur 20 peut être inférieur à celui des nervures 16 si bien que la tôle support 18 est intercalée entre les nervures 16 ou bien être supérieur à celui des nervures 16 si bien qu'une zone dudit stoppeur d'épaisseur inférieur à X1 est intercalée entre les nervures 16 comme illustré par la figure 5.

Cette dernière variante a pour avantages d'intercaler entre les nervures 16 une pièce d'une précision relativement importante, le stoppeur étant parfaitement calibré, et d'obtenir une distance inter-cylindre entre les ouvertures 12 plus réduite du fait que seul le stoppeur 20 est disposé entre lesdites ouvertures 12.

Le stoppeur 20 peut être de type métallique ou bien en matériau fibreux comme décrit dans la demande de brevet FR-01.061291 (numéro de publication FR 2 824 613) au nom du demandeur.

Selon une autre caractéristique, le stoppeur peut avoir un profil évolutif le long de sa périphérie. Ainsi, son épaisseur peut varier afin d'obtenir une pression de contact constante malgré des efforts de serrage localisés.

Selon l'invention, le stoppeur 20 est fixé à la tôle support 18 en interposant entre lesdites pièces un élément 24.

De préférence, l'élément 24 est de forme cylindrique sous forme d'une goupille ou d'un rivet, l'élément 24 étant distinct du stoppeur et de la tôle support.

Selon un mode de réalisation préféré, illustré par la figure 5, on utilise un ou des rivets de type ouvert, appelés oeillets, avec à chaque extrémité un rebord 26 rabattu contre les faces de la tôle support 18 et du stoppeur 20 et les enserrant.

Dans ce cas, il n'est pas nécessaire d'enfoncer à force le ou les rivets entre le stoppeur 20 et la tôle support 18, ces derniers étant reliés l'un à l'autre grâce aux rebords 26 qui limitent les mouvements relatifs entre ces deux éléments 18, 20.

Cette solution permet d'obtenir une liaison stoppeur/tôle support moins rigide que les solutions par soudage ou collage de l'art antérieur, améliorant le fonctionnement du joint de culasse. Cet agencement autorise un mouvement relatif du stoppeur par rapport aux autres tôles permettant au joint de mieux s'adapter aux pressions de serrage inévitablement différentes selon les zones considérées.

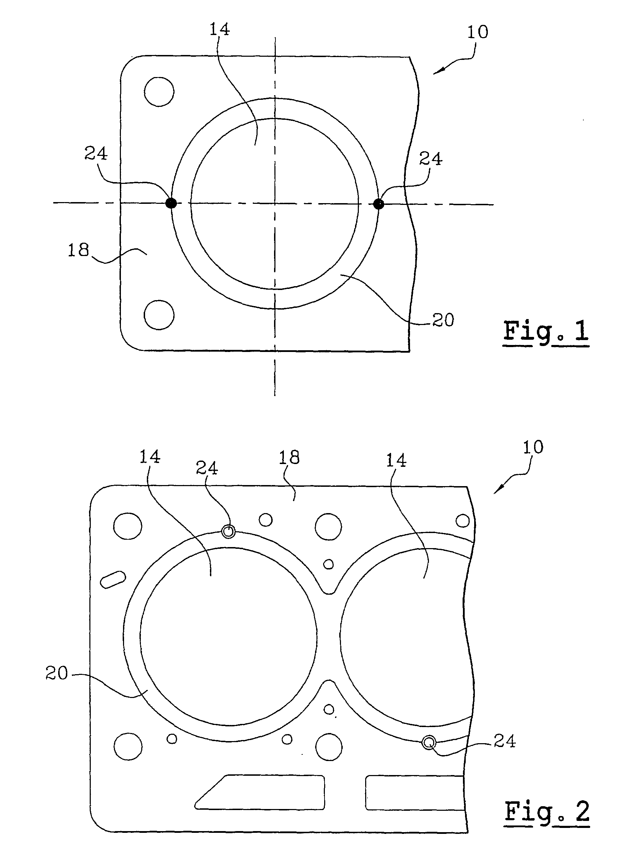

Selon une première variante illustrée par les figures 1, 2 et 4, le rivet 24 est disposé directement entre le stoppeur 20 et la tôle support 18, sans aucune modification du profil de ces deux éléments.

Selon une deuxième variante illustrée par la figure 3, le rivet 24 est disposé au niveau d'une languette 26' ménagée à la périphérie du stoppeur 20. Cette languette 26' a pour principal avantage d'obtenir une indexation en rotation du stoppeur 20 par rapport au reste du joint, notamment lorsque ce dernier a un profil évolutif le long de sa circonférence. Bien entendu, d'autres moyens d'indexation peuvent être utilisés à la place des languettes pour positionner en rotation le stoppeur.

Par ailleurs, cet agencement procure une plus grande amplitude de mouvement du stoppeur 20 par rapport à la tôle support 18, améliorant l'efficacité dudit stoppeur.

Dans tous les cas, le rivet 24 a une épaisseur inférieure à l'épaisseur totale du joint de culasse et des lumières 28 sont ménagées au niveau des tôles extérieures 12 au droit des rivets 24 afin que la fixation ne perturbe le bon fonctionnement du joint.

Le nombre de rivets nécessaires au maintien du stoppeur est adapté par l'homme de l'art pour assurer le maintien du stoppeur 20.

Pour un anneau simple, il sera de préférence nécessaire de prévoir deux rivets diamétralement opposés.

Dans le cas, de stoppeurs reliés entre eux dans la zone inter-cylindre comme illustré par les figures 2 et 3, un rivet par cylindre peut suffire, ces derniers étant disposés en quinconce.

Selon une autre variante, l'élément 24 interposé entre le stoppeur 20 et la tôle support 18 peut se présenter sous la forme d'une goupille enfoncée à force selon un montage entre cuir et chair afin d'assurer une liaison solide entre le stoppeur et ladite tôle.

Bien entendu, l'invention n'est évidemment pas limitée au mode de réalisation représenté et décrit ci-dessus, mais en couvre au contraire toutes les variantes, notamment en ce qui concerne le profil du stoppeur, les matériaux utilisés, la réalisation des tôles qui peuvent être chacune constituées d'un empilage de tôles ainsi que le profils et la positions des nervures.

## Revendications

1. Joint de culasse avec au moins une ouverture (14) correspondant à une chambre de combustion, comprenant d'une part, une tôle (12) dite extérieure comportant une nervure (16) circulaire, entourant l'ouverture (14), ménagée à distance du bord de ladite ouverture (14), et d'autre part, une tôle support (18) disposée contre la face de la tôle (12) extérieure portant en saillie la nervure (16), comprenant une ouverture de diamètre supérieure à l'ouverture (14) de la tôle extérieure afin de définir un espace dans lequel est disposé un stoppeur (20) sous forme d'une cale annulaire de diamètre intérieur correspondant à celui de l'ouverture (14) et de diamètre extérieur sensiblement ajusté à l'ouverture de la tôle support de manière à être disposé bord à bord, **caractérisé en ce qu'**il comprend un élément (24) distinct interposé entre le stoppeur (20) et la tôle support assurant le maintien dudit stoppeur.

2. Joint de culasse avec au moins une ouverture (14) correspondant à une chambre de combustion, comprenant d'une part, au moins deux tôles (12) dites extérieures, au moins l'une d'elles comportant une nervure (16) circulaire, entourant l'ouverture (14), ménagée à distance du bord de ladite ouverture (14), et d'autre part, une tôle support (18) disposée entre les tôles (12) extérieures, comprenant une ouverture de diamètre supérieure à l'ouverture (14) des tôles extérieures afin de définir un espace dans lequel est disposé un stoppeur (20) sous forme d'une cale annulaire de diamètre intérieur correspondant à celui de l'ouverture (14) et de diamètre extérieur sensiblement ajusté à l'ouverture de la tôle support de manière à être disposé bord à bord, **caractérisé en ce qu'**il comprend un élément (24) distinct interposé entre le stoppeur (20) et la tôle support assurant le maintien dudit stoppeur.

3. Joint de culasse selon la revendication 1 ou 2, **caractérisé en ce que** l'élément (24) interposé entre le stoppeur (20) et la tôle support (18) se présente sous la forme d'un rivet comportant à chaque extrémité un rebord (26) rabattu contre les faces de la tôle support (18) et du stoppeur (20) afin de les enserrer et de limiter leurs mouvements relatifs.

4. Joint de culasse selon la revendication 3, **caractérisé en ce qu'**une lumière (28) est ménagée au niveau de la ou des tôles extérieures (12) au droit de chaque rivet (24).

5. Joint de culasse selon la revendication 3 ou 4, **caractérisé en ce que** le rivet (24) a une épaisseur inférieure à l'épaisseur totale du joint de culasse.

6. Joint de culasse selon l'une quelconque des revendications 1 à 5, **caractérisé en ce que** le stoppeur (18) comprend en périphérie au moins une languette (26') au niveau de laquelle est disposé l'élément (24) de maintien.

7. joint de culasse selon la revendication 1 ou 2, **caractérisé en ce qu'**une goupille enfoncée à force selon un montage entre cuir et chair est interposée entre le stoppeur (20) et la tôle support (18).

## Claims

1. A cylinder-head gasket with at least one opening (14) corresponding to a combustion chamber, comprising on the one hand an "outer" metal sheet (12) having a circular rib (16) surrounding the opening (14) and formed at a distance from the edge of the said opening (14) and, on the other hand, a metal support sheet (18) placed against the face of the outer metal sheet (12) bearing the projecting rib (16), comprising an opening whose diameter is greater than the opening (14) of the outer metal sheet so as to define a space in which is arranged a stop ring (20) in the form of an annular wedge having an inside diameter corresponding to that of the opening (14) and an outside diameter substantially adjusted to the opening of the metal support sheet so as to be arranged edge to edge, **characterized in that** it comprises a separate element (24) interposed between the stop ring (20) and the metal support sheet for retaining the said stop ring.

2. A cylinder-head gasket with at least one opening (14) corresponding to a combustion chamber, comprising on the one hand at least two "outer" metal sheets (12), at least one of them having a circular rib (16) surrounding the opening (14) and formed at a distance from the edge of the said opening (14), and, on the other hand, a metal support sheet (18) arranged between the outer metal sheets (12), comprising an opening whose diameter is greater than the opening (14) of the outer metal sheets so as to define a space in which is arranged a stop ring (20) in the form of an annular wedge having an inside diameter corresponding to that of the opening (14) and an outside diameter substantially adjusted to the opening of the metal support sheet so as to be arranged edge to edge, **characterized in that** it comprises a separate element (24) interposed between the stop ring (20) and the metal support sheet for retaining the said stop ring.

3. A cylinder-head gasket according to claim 1 or 2, **characterized in that** the element (24) interposed between the stop ring (20) and the metal support sheet (18) takes the form of a rivet having at each end a rim (26) which is turned down against the faces of the metal support sheet (18) and of the stop ring (20) in order to grip them and limit their relative movements.

4. A cylinder-head gasket according to claim 3, **characterized in that** a slot (28) is made in the outer metal sheet or sheets (12) in line with each rivet (24).

5. A cylinder-head gasket according to claim 3 or 4, **characterized in that** the rivet (24) has a thickness which is less than the total thickness of the cylinder-head gasket.

6. A cylinder-head gasket according to any one of claims 1 to 5, **characterized in that** the stop ring (18) comprises at its periphery at least one lobe (26') on which the retaining element (24) is arranged.

7. A cylinder-head gasket according to claim 1 or 2, **characterized in that** a pin force-fitted in an interference seat assembly is interposed between the stop ring (20) and the metal support sheet (18).

## Patentansprüche

1. Zylinderkopfdichtung mit mindestens einer Öffnung (14) entsprechend einer Verbrennungskammer, umfassend einerseits ein so genanntes Außenblech (12), das eine kreisförmige Rippe (16), die die Öffnung (14) umgibt und in einem Abstand zum Rand der Öffnung (14) angeordnet ist, umfasst, und andererseits ein Stützblech (18), das an der Fläche des Außenblechs (12) angeordnet ist, die die Rippe (16) überstehend trägt, umfassend eine Öffnung mit einem größeren Durchmesser als die Öffnung (14) des Außenblechs, um einen Raum zu definieren, in dem ein Stopper (20) in Form eines ringförmigen Keils mit einem Innendurchmesser, der jenem der Öffnung (14) entspricht, und einem Außendurchmesser, der im Wesentlichen an die Öffnung des Stützblechs angepasst ist, um Stoß an Stoß angeordnet zu werden, angeordnet ist, **dadurch gekennzeichnet, dass** sie ein getrenntes Element (24) umfasst, das zwischen dem Stopper (20) und dem Stützblech, das den Halt des Stoppers sichert, angeordnet ist.

2. Zylinderkopfdichtung mit mindestens einer Öffnung (14) entsprechend einer Verbrennungskammer, umfassend einerseits mindestens zwei so genannte Außenbleche (12), wobei mindestens eines von ihnen eine kreisförmige Rippe (16), die die Öffnung (14) umgibt und in einem Abstand zum Rand der Öffnung (14) angeordnet ist, umfasst, und andererseits ein Stützblech (18), das zwischen den Außenblechen (12) angeordnet ist, umfassend eine Öffnung mit einem größeren Durchmesser als die Öffnung (14) der Außenbleche, um einen Raum zu definieren, in dem ein Stopper (20) in Form eines ringförmigen Keils mit einem Innendurchmesser, der jenem der Öffnung (14) entspricht, und einem Außendurchmesser, der im Wesentlichen an die Öffnung des Stützblechs angepasst ist, um Stoß an Stoß angeordnet zu werden, angeordnet ist, **dadurch gekennzeichnet, dass** sie ein getrenntes Element (24) umfasst, das zwischen dem Stopper (20) und dem Stützblech, das den Halt des Stoppers sichert, angeordnet ist.

3. Zylinderkopfdichtung nach Anspruch 1 oder 2, **dadurch gekennzeichnet, dass** das zwischen dem Stopper (20) und dem Stützblech (18) angeordnete Element (24) in Form eines Niets vorhanden ist, der an jedem Ende eine Leiste (26) umfasst, die auf die Flächen des Stützblechs (18) und des Stoppers (20) umgelegt ist, um sie festzuklemmen und ihre relativen Bewegungen zu begrenzen.

4. Zylinderkopfdichtung nach Anspruch 3, **dadurch gekennzeichnet, dass** eine Öffnung (28) im Bereich des oder der Außenbleche (12) im rechten Winkel zu jedem Niet (24) vorgesehen ist.

5. Zylinderkopfdichtung nach Anspruch 3 oder 4, **dadurch gekennzeichnet, dass** der Niet (24) eine geringere Dicke als die Gesamtdicke der Zylinderkopfdichtung hat.

6. Zylinderkopfdichtung nach einem der Ansprüche 1 bis 5, **dadurch gekennzeichnet, dass** der Stopper (18) an der Peripherie mindestens eine Zunge (26') umfasst, in deren Bereich das Halteelement (24) angeordnet ist.

7. Zylinderkopfdichtung nach Anspruch 1 oder 2, **dadurch gekennzeichnet, dass** ein fest eingeschlagener Stift in Form einer Zwischenlage zwischen dem Stopper (20) und dem Stützblech (18) montiert ist.
